(19) Europäisches Patentamt / European Patent Office / Office européen des brevets

(11) **EP 1 999 484 B1**

## (12) FASCICULE DE BREVET EUROPEEN

(45) Date de publication et mention
de la délivrance du brevet:
**30.06.2010 Bulletin 2010/26**

(21) Numéro de dépôt: **07731793.1**

(22) Date de dépôt: **22.03.2007**

(51) Int Cl.:
*G01S 17/02* (2006.01)    *G01S 11/12* (2006.01)

(86) Numéro de dépôt international:
**PCT/FR2007/050980**

(87) Numéro de publication internationale:
**WO 2007/113428 (11.10.2007 Gazette 2007/41)**

(54) **DETECTION D'OBSTACLE**

HINDERNISDETEKTION

OBSTACLE DETECTION

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **24.03.2006 FR 0651021**

(43) Date de publication de la demande:
**10.12.2008 Bulletin 2008/50**

(73) Titulaires:
- **INSTITUT NATIONAL DE RECHERCHE SUR LES TRANSPORTS ET LEUR SECURITE (INRETS)**
  **94110 Arcueil (FR)**
- **Laboratoire Central des Ponts et Chaussées**
  **75015 Paris (FR)**

(72) Inventeurs:
- **LABAYRADE, Raphaël**
  **78000 Versailles (FR)**
- **AUBERT, Didier**
  **91540 Mennecy (FR)**

(74) Mandataire: **Laget, Jean-Loup**
**Brema-Loyer**
**Le Centralis**
**63 avenue du Général Leclerc**
**92340 Bourg-la-Reine (FR)**

(56) Documents cités:
**WO-A-03/001472    US-A- 5 410 346**
**US-B2- 6 944 543**

- **R. LABAYRADE, C. ROYERE, D. GRUYER, D. AUBERT: "Cooperative Fusion for Multi-Obstacles Detection with Use of Stereovision and Laser Scanner" AUTONOMOUS ROBOTS, vol. 19, no. 2, septembre 2005 (2005-09), pages 117-140, XP002409997 Netherlands cité dans la demande**
- **LABAYRADE R ET AL: "Real time obstacle detection in stereovision on non flat road geometry through V-disparity representation" INTELLIGENT VEHICLE SYMPOSIUM, 2002. IEEE JUN 17-21, 2002, PISCATAWAY, NJ, USA,IEEE, vol. 2, 17 juin 2002 (2002-06-17), pages 646-651, XP010635896 ISBN: 0-7803-7346-4 cité dans la demande**

EP 1 999 484 B1

## Description

La présente invention a pour objets un procédé de détection d'un obstacle et un dispositif de détection d'un obstacle.

La détection d'obstacle sur une route est une tâche essentielle pour augmenter la sécurité de conduite. Cette détection doit être effectuée en temps réel, de manière fiable et précise, sans fausse alarme et avec un taux faible d'absence de détection.

Des dispositifs variés peuvent être utilisés pour réaliser une détection d'obstacle. Les dispositifs connus comprennent les lasers, qui permettent de fournir un positionnement centimétrique d'un obstacle. Cependant, des erreurs de détection peuvent se produire, notamment à cause du tangage du véhicule. En effet, dans ce cas, le plan laser peut couper la surface de la route et un impact laser ne représente plus nécessairement un obstacle.

Les dispositifs connus comprennent également des dispositifs de stéréovision. Avec de tels dispositifs, la hauteur et la largeur des obstacles ainsi que la géométrie de la route peuvent être estimées. L'une des images de la paire stéréoscopique peut en outre être utilisée pour détecter la voie de circulation ou la chaussée sur laquelle se trouve le véhicule, ce qui permet de filtrer les obstacles qui ne sont pas sur la voie dé circulation ou sur la chaussée. La valeur du tangage peut également être estimée. Cependant, l'estimation de position et de profondeur est moins précise qu'avec un laser.

A titre d'exemple, les documents WO-03/001472 et US 5 410 346 décrivent des procédés de détection d'obstacle sur une route.

La présente invention a pour but de proposer un dispositif de détection d'obstacle qui évite au moins certains des inconvénients précités et qui permette une détection d'obstacle en temps réel et fiable.

A cet effet, l'invention a pour objet un procédé de détection d'un obstacle sur une route sur laquelle se trouve un véhicule, **caractérisé en ce qu**'il comprend les étapes consistant à :

a) définir une cible par une position tridimensionnelle,
b) déterminer une zone d'intérêt associée à ladite cible définie à l'étape a), ladite zone d'intérêt étant une portion d'une image représentant ladite route, ladite image étant réalisée par un dispositif d'acquisition embarqué dans ledit véhicule,
c) détecter ou non la présence d'un obstacle dans ladite zone d'intérêt.

Avantageusement, l'étape b) comprend la sous-étape consistant à définir une zone d'intérêt par un rectangle de surface prédéterminée, ledit rectangle étant centré sur un pixel de ladite zone d'intérêt de ladite image correspondant à ladite cible.

De préférence, ledit dispositif d'acquisition est un premier dispositif d'acquisition, et en ce que, à l'étape a), ladite cible est définie par un point d'un obstacle potentiel détecté par un deuxième dispositif d'acquisition embarqué dans ledit véhicule.

Selon un mode de réalisation, ledit deuxième dispositif d'acquisition est un laser, disposé dans ledit véhicule de manière à fournir des impacts laser dans un plan sensiblement horizontal et de hauteur prédéterminée par rapport à un repère lié au véhicule, ladite cible étant définie par un impact laser.

Selon un autre mode de réalisation, ledit deuxième dispositif d'acquisition est un laser, disposé dans ledit véhicule de manière à fournir des impacts laser dans un plan sensiblement horizontal et de hauteur prédéterminée par rapport à un repère lié au véhicule, ladite cible étant définie par le centre de gravité d'un ensemble d'impacts laser proches les uns des autres.

Selon un autre mode de réalisation, ledit dispositif d'acquisition est un dispositif de stéréovision comprenant deux caméras disposées dans ledit véhicule à distance l'une de l'autre, l'étape a) comprenant la sous-étape consistant à déterminer une carte de disparité à partir de deux images de la route provenant respectivement desdites deux caméras, ladite cible étant définie par un point de disparité connue de ladite carte de disparité.

Selon un autre mode de réalisation, ledit dispositif d'acquisition est un dispositif de stéréovision comprenant deux caméras disposées dans ledit véhicule à distance l'une de l'autre, l'étape a) comprenant les sous-étapes consistant à détecter un objet disposé au-dessus du niveau de la route et à caractériser ledit objet par un cadre englobant, ladite cible étant définie par le centre de gravité dudit cadre englobant.

Selon un mode de réalisation de l'invention, l'étape c) comprend les sous-étapes consistant à :

- déterminer une carte de v-disparité de ladite zone d'intérêt,
- déterminer la droite la plus dense de la carte de v-disparité en utilisant une transformée de Hough, et
- considérer que la présence d'un obstacle est détectée si la valeur absolue de la pente de ladite droite la plus dense est inférieure à un seuil prédéterminé.

Selon un mode de réalisation de l'invention, l'étape b) comprend une sous-étape consistant à estimer une géométrie locale de ladite route dans ladite zone d'intérêt, l'étape c) consistant à détecter ou non la présence d'un obstacle dans ladite zone d'intérêt à partir de ladite géométrie locale de la route.

Avantageusement, ledit dispositif d'acquisition utilisé à l'étape b) est un dispositif de stéréovision comprenant deux caméras fournissant chacune une image représentant la route, l'étape b) comprenant une sous-étape consistant à déterminer une carte de v-disparité de ladite zone d'intérêt à partir desdites deux images , ladite carte de v-disparité représentant une variable de disparité en fonction d'une coordonnée, dite ordonnée, liée auxdites images, ladite géométrie locale de la route étant définie par un profil local de la route sur ladite carte de v-disparité.

Selon un mode de réalisation de l'invention, l'étape c) comprend les sous-étapes consistant à :

- déterminer une ordonnée de cible et une valeur de disparité de cible de ladite variable de disparité associées à ladite cible,
- Pour ladite valeur de disparité de cible, déterminer une ordonnée de route associée au profil de la route,
- Calculer la différence entre ladite ordonnée de route et ladite ordonnée de cible, et
- Si ladite différence est supérieure à un seuil prédéterminé, considérer que la présence d'un obstacle est détectée.

Selon un mode de réalisation de l'invention, la présence d'un obstacle est détectée ou non à partir d'un ensemble de pixels de ladite zone d'intérêt n'appartenant pas audit profil local.

De préférence, l'étape c) comprend les sous-étapes consistant à :

d) sélectionner un pixel de ladite zone d'intérêt, ladite zone d'intérêt étant une zone d'une desdites deux images, dite première image,

e) déterminer la position d'un pixel de l'autre desdites deux images, dite deuxième image, correspondant audit pixel sélectionné à l'étape d) en faisant l'hypothèse que ledit pixel sélectionné à l'étape d) appartient au profil local estimé à l'étape b),

f) comparer un voisinage dudit pixel de ladite première image et dudit pixel correspondant de ladite deuxième image pour déterminer la valeur d'une variable de ressemblance, ladite valeur de la variable de ressemblance étant d'autant plus faible que ledit voisinage du pixel de ladite première image et du pixel correspondant de ladite deuxième image sont ressemblants, et

g) si la valeur de ladite variable de ressemblance est inférieure à un seuil prédéterminé, considérer que ledit pixel de ladite première image appartient au profil de la route, sinon considérer que ledit pixel de ladite première image n'appartient pas au profil de la route.

De préférence, l'étape c) comporte les sous-étapes consistant à :

h) sélectionner un pixel de ladite zone d'intérêt qui n'appartient pas audit profil local,

i) tester une condition de correspondance entre la profondeur dudit pixel sélectionné à l'étape h) et la profondeur de ladite cible, ladite condition étant vérifiée lorsque la profondeur dudit pixel correspond à la profondeur de ladite cible, la profondeur dudit pixel étant définie comme une composante de la distance entre ledit véhicule et un point représenté par ledit pixel selon une direction longitudinale du véhicule, la profondeur de ladite cible étant définie comme une composante de la distance entre ledit véhicule et ladite cible selon ladite direction longitudinale du véhicule,

j) répéter les étapes h) et i) pour chaque pixel d'un ensemble de pixels de ladite zone d'intérêt n'appartenant pas audit profil local, et

k) détecter la présence d'un obstacle si la condition de l'étape i) est vérifiée pour un nombre de pixels supérieur à un seuil prédéterminé.

Selon un mode de réalisation de l'invention, à l'étape h) ladite zone d'intérêt est une zone d'une desdites deux images, dite première image, l'étape i) comprenant les sous-étapes consistant à :

l) déterminer la position d'un pixel de l'autre desdites deux images, dite deuxième image, correspondant audit pixel sélectionné à l'étape h) en faisant l'hypothèse que ledit pixel sélectionné à l'étape h) à la même profondeur que ladite cible,

m) comparer un voisinage dudit pixel de ladite première image et dudit pixel correspondant de ladite deuxième image pour déterminer la valeur d'une variable de ressemblance,

n) et si la valeur de ladite variable de ressemblance est inférieure à un seuil prédéterminé, considérer que la profondeur dudit pixel de ladite première image est égale à la profondeur de ladite cible, sinon considérer que la profondeur dudit pixel de ladite première image n'est pas égale à la profondeur de ladite cible.

L'invention a également pour objet un dispositif de détection d'un obstacle embarqué dans un véhicule, **caractérisé en ce qu'**il comprend des moyens de définition de cible aptes à définir une cible par une position tridimensionnelle, des moyens de détermination d'une zone d'intérêt associée à ladite cible, ladite zone d'intérêt étant une portion d'une image représentant ladite route, ladite image étant réalisée par un dispositif d'acquisition dudit dispositif de détection, ledit dispositif de détection comportant des moyens de traitement aptes à détecter ou non la présence d'un obstacle dans ladite zone d'intérêt.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.

Sur ces dessins :

- la figure 1 est une vue schématique fonctionnelle d'un dispositif de détection d'obstacle selon un premier mode de réalisation de l'invention ;
- la figure 2 est une vue schématique montrant, d'une part, une première et une deuxième images provenant d'une première et d'une deuxième caméras du dispositif de détection d'obstacle de la figure 1 et, d'autre part, deux vues, associées respectivement à chacune des deux images, obtenues par extraction des bords non horizontaux des images ;
- la figure 3 est une vue schématique simplifiée montrant la perspective des deux images de la figure 2 dans un repère lié au véhicule dans lequel le dispositif de détection d'obstacle est disposé ;
- la figure 4 est un schéma fonctionnel représentant les étapes d'un procédé de détection d'obstacle ;
- la figure 5 est une vue schématique simplifiée montrant une carte de v-disparité ;
- la figure 6 est une vue schématique simplifiée montrant une zone d'intérêt sélectionnée dans la première image ;
- la figure 7 est une vue schématique simplifiée montrant un voisinage d'un pixel de la zone d'intérêt de la figure 6 ;
- la figure 8 est un schéma fonctionnel représentant les étapes d'un procédé de détermination d'une carte de v-disparité ;
- la figure 9 est un schéma fonctionnel partiel représentant les étapes du procédé de détection d'obstacle selon un deuxième mode de réalisation de l'invention ;
- la figure 10 est un schéma fonctionnel représentant les étapes du procédé de détection d'obstacle selon un troisième mode de réalisation de l'invention, et
- la figure 11 est un schéma fonctionnel représentant les étapes du procédé de détection d'obstacle selon un quatrième mode de réalisation de l'invention.

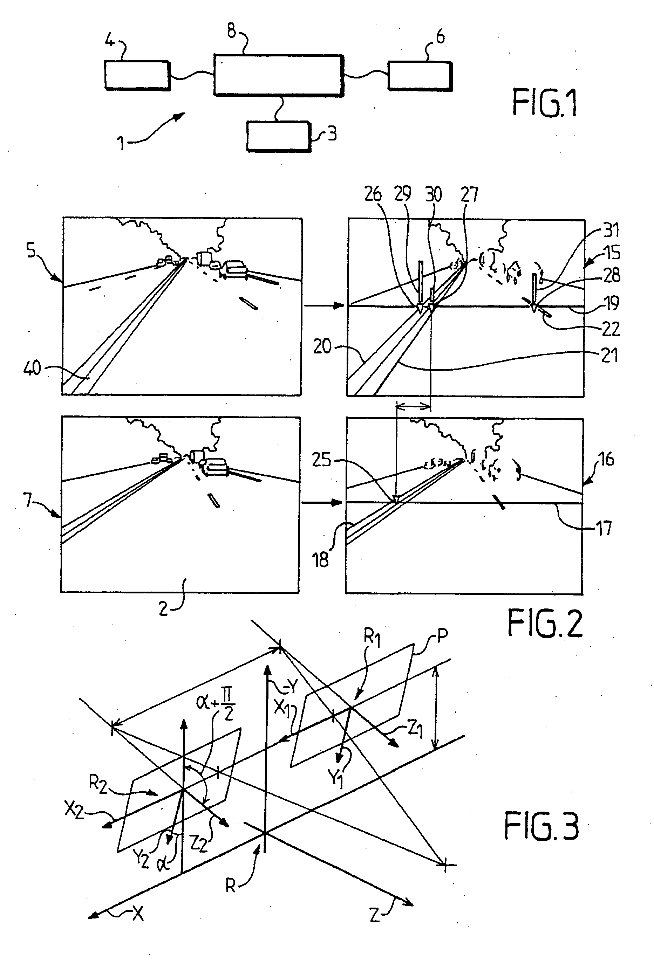

En se référant à la figure 1, un dispositif de détection d'obstacle 1 est schématisé. Le dispositif de détection d'obstacle 1 est disposé dans un véhicule (non représenté) et est destiné à détecter la présence d'un obstacle qui pourrait constituer un danger pour le conducteur et/ou les passagers du véhicule, en particulier un obstacle présent sur une route 2 (figure 2) sur laquelle se trouve le véhicule.

Le dispositif 1 comporte un laser 3. Le laser 3 est par exemple un laser Sick apte à fournir 100 impacts laser toutes les 13 ms dans un angle allant de -50° à +50°. Le laser 3 est disposé dans le véhicule de manière que les impacts laser se trouvent tous dans un plan sensiblement horizontal dans un repère orthogonal R (figure 3) lié au véhicule. Le repère R est défini par un axe X de direction sensiblement transversale par rapport au véhicule, un axe Y de direction sensiblement verticale, et un axe Z de direction sensiblement longitudinale par rapport au véhicule. La hauteur h du laser 3 selon l'axe Y est par exemple choisie telle que la hauteur du laser 3 par rapport à la route 2 soit sensiblement égale à 40 cm en position de repos, c'est-à-dire en l'absence de tangage du véhicule.

En se référant aux figures 1 à 3, le dispositif 1 comporte un dispositif de stéréovision comprenant une première caméra 4, apte à fournir une première image 5 de la route 2, et une deuxième caméra 6, apte à fournir une deuxième image 7 de la route 2.

Les caméras 4 et 6 sont disposées dans un même plan P incliné d'un angle a par rapport au plan formé par les axes X et Y du repère R. Les caméras 4 et 6 sont disposées à distance l'une de l'autre selon l'axe X. Un repère orthonormé R1 est associé à la première image 5, l'origine du repère R1 se trouvant au centre de la première image 5. Un repère orthonormé R2 est associé à la deuxième image, l'origine du repère R2 se trouvant au centre de la deuxième image 7. Un axe X1 du repère R1 est confondu avec un axe X2 du repère R2, les axes X1 et X2 étant parallèles à l'axe X du repère R. Un axe Y1 du repère R1 est parallèle à un axe Y2 du repère R2, les axes Y1 et Y2 étant disposés selon la hauteur des images 5 et 7. Un axe Z1 du repère R1 est parallèle à un axe Z2 du repère R2.

Ainsi, la première image 5 représente une vue d'une zone de la route 2 située vers l'avant du véhicule et la deuxième image 7 représente une vue de la zone avec une perspective différente.

Les caméras 4 et 6 sont par exemple des caméras CCD (Charge Coupled Device) avec une distance focale de 8.5 mm et une ligne de base de 1.02m. La résolution de chaque image est par exemple de 384x288 pixels et la cadence des images de 25Hz.

Le dispositif 1 comporte une unité centrale 8, connectée au laser 3 et aux caméras 4, 6. L'unité centrale 8 comporte un module d'acquisition apte à recevoir et à mémoriser, d'une part, des données d'impact relatives aux impacts laser provenant du laser 3 et, d'autre part, des données d'image relatives aux première et deuxième images 5, 7 provenant respectivement des première et deuxième caméras 4, 6. L'unité centrale 8 comporte un module de traitement pour traiter les données d'impact et les données d'image, à l'aide d'un procédé de détection d'obstacle, de manière à permettre une détection fiable d'un obstacle.

**Procédé de détection d'obstacle**

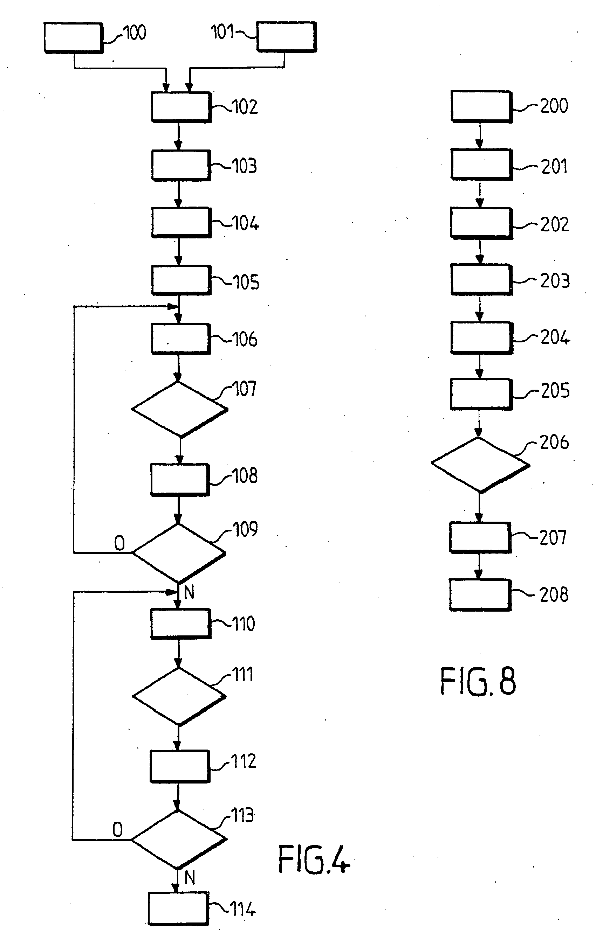

En se référant à la figure 4, on va maintenant décrire les étapes du procédé de détection d'obstacle selon un premier mode de réalisation.

A l'étape 100, l'unité centrale 8 reçoit des données d'impact relatives à des impacts laser. Les données d'impact comprennent des coordonnées tridimensionnelles de chaque impact. Ces données sont par exemple fournies sous la forme d'un écart latéral et d'une profondeur par rapport à la position du laser 3, la hauteur h étant connue dans le repère R.

A l'étape 101, l'unité centrale 8 reçoit des données d'image provenant de la première caméra 4 et des données d'image provenant de la deuxième caméra 6. Les données d'image sont relatives à une première image 5 et à une deuxième image 7 qui se correspondent, c'est-à-dire qu'il s'agit de deux images représentant la route 2 au même instant t.

Du fait de la différence entre la fréquence d'acquisition du laser 3 et la cadence des caméras 4, 6, les données d'impact reçues à l'étape 100 ne sont pas nécessairement issues d'un impact laser ayant eu lieu précisément à l'instant t. Dans ce cas, l'unité centrale 8 modifie les données d'impact en fonction de paramètres du véhicule, par exemple sa vitesse, qui peut être fournie par un capteur de vitesse (non représenté) relié à l'unité centrale 8, pour que les données d'impact correspondent aux données d'image. Lorsque les étapes 100 et 101 ont été effectuées, le procédé passe à l'étape 102.

A l'étape 102, l'unité centrale 8 définit une cible C. La cible C correspond à un obstacle potentiel dont on souhaite étudier plus en détail le voisinage pour confirmer ou infirmer la présence réelle d'un obstacle. La cible C est définie par les coordonnées d'un impact laser reçues à l'étape 100.

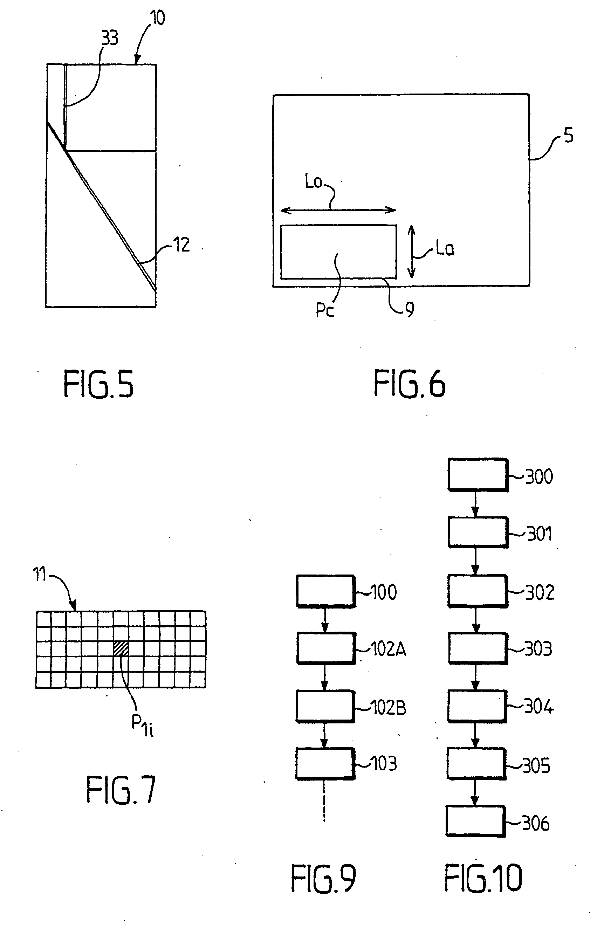

A l'étape 103, l'unité centrale 8 détermine dans la première image 5 une zone d'intérêt 9 (figure 6) correspondant à la cible C définie à l'étape 102. La zone d'intérêt 9 est un rectangle de largeur La et de longueur Lo prédéfinies, le rectangle étant centré sur le pixel PC de la première image 5 qui correspond à la cible C. En d'autres termes, l'unité centrale 8 projette la cible C sur la première image 5 et définit une zone d'intérêt 9 autour du pixel PC résultant de la projection. La zone d'intérêt 9 est incluse strictement dans la première image 5, c'est-à-dire que la zone d'intérêt 9 correspond à une portion de la première image 5.

A l'étape 104, l'unité centrale 8 détermine une carte de v-disparité de la zone d'intérêt 9. La carte de v-disparité est un graphe représentant l'évolution d'une variable de disparité $\Delta$ en fonction de l'axe Y1 du repère R1. La variable de disparité $\Delta$ correspond à une distance entre l'abscisse d'un pixel P1 de la première image 5 dans le repère R1, c'est-à-dire la coordonnée du pixel P1 selon l'axe X1 du repère R1, et l'abscisse du pixel P2 correspondant de la deuxième image 7 dans le repère R2, c'est-à-dire la coordonnée du pixel P2 selon l'axe X2 du repère R2. Le procédé permettant de déterminer une carte de v-disparité sera décrit en détail plus loin.

A l'étape 105, l'unité centrale 8 estime la géométrie locale de la route 2 dans la zone d'intérêt 9. Ici, l'estimation de la géométrie locale de la route est réalisée par l'estimation du profil local de la route 2 sur la carte de v-disparité. Une méthode pour extraire le profil local de la route 2 de la carte de v-disparité consiste à réaliser une transformée de Hough de la carte de v-disparité et à déterminer parmi les droites potentielles la droite qui correspond au maximum de la transformée de Hough. Une droite potentielle est une droite compatible avec un profil de route, par exemple une droite sensiblement non verticale. Lorsque le maximum de la transformée de Hough est inférieur à un seuil prédéterminé, cela signifie qu'il n'y a pas assez de pixels d'intérêt, par exemple de pixels contrastés, dans la zone d'intérêt. Dans ce cas, un profil de route moyen prédéterminé peut être utilisé pour les étapes suivantes. L'extraction du profil local de la route 2 est décrite en détail dans le document de R. Labayrade, D. Aubert et J.P. Tarel, « Real Time Obstacle Detection on Non Flat Road Geometry through 'V-Disparity' Représentation », comptes-rendus de la conférence IEEE Intelligent Véhicules Symposium, IV 2002, Versailles, Juin 2002.

A l'étape 106, l'unité centrale 8 sélectionne un pixel P1i (figure 7), de la zone d'intérêt 9, qui n'a pas encore été sélectionné à l'étape 106, i étant un entier compris entre 1 et le nombre de pixels de la zone d'intérêt 9.

A l'étape 107, l'unité centrale 8 teste une condition d'appartenance à la route 2 du pixel P1i sélectionné à l'étape 106. Cette condition revient à tester si le pixel P1i appartient à la surface locale de la route.

Pour cela, l'unité centrale 8 fait l'hypothèse que le pixel P1i appartient à la surface de la route 2. L'unité centrale 8 détermine, à partir de la carte de v-disparité déterminée à l'étape 104, la valeur $\Delta 1i$ de la variable de disparité $\Delta$ correspondant à l'ordonnée du pixel P1i. L'unité centrale 8 détermine le pixel P2i de la deuxième image 7 qui correspond au pixel P1i de la première image. Le pixel P1i a la même ordonnée v1i dans le repère R1 que le pixel P2i dans le repère R2 du fait de la disposition des caméras 4 et 6. L'abscisse u1i du pixel P1i dans le repère R1 diffère de l'abscisse du pixel P2i dans le repère R2 de la valeur $\Delta$1i de la variable de disparité $\Delta$. Dans l'exemple représenté, l'abscisse du pixel P2i dans le repère R2 est donc u1i-$\Delta$1i.

On appelle image de droite l'image qui est prise depuis la droite du véhicule par rapport à l'autre image. Dans l'exemple représenté, la première image 5 est l'image de gauche et la deuxième image 7 est l'image de droite. On notera que, si le pixel P1i se trouve sur l'image de droite et le pixel P2i sur l'image de gauche, l'abscisse du pixel P2i dans le repère R2 est égale à uli+ $\Delta$1i.

L'unité centrale 8 évalue la ressemblance d'un voisinage 11 (figure 7) du pixel P1i et d'un voisinage (non représenté) du pixel P2i. Le voisinage du pixel P1i est défini par une fenêtre de dimension (2n+1)x(2m+1), où n et m sont deux entiers positifs, la fenêtre étant centrée sur le pixel P1i. Le voisinage du pixel P2i est défini par une fenêtre de dimension (2n+1)x(2m+1), la fenêtre étant centrée sur le pixel P2i.

La ressemblance est évaluée par le calcul de la valeur d'une variable de ressemblance :

$$A(u, \Delta, v) = \sum_{k=-m}^{+m} \sum_{p=-n}^{+n} \left| I_1(u + k, v + p) - I_2(u + \Delta + k, v + p) \right|.$$

Où I1 désigne la première image et I2 désigne la deuxième image.

La condition d'appartenance à la route du pixel P1i sélectionné à l'étape 106 est vérifiée lorsque la valeur de la variable de ressemblance A est inférieure à un seuil prédéterminé.

Cette étape permet de déterminer si la cible C, qui est un obstacle potentiel détecté par le laser 3, a également été détectée par le dispositif de stéréovision. Il s'agit donc d'un deuxième contrôle de la présence d'un obstacle.

A l'étape 108, l'unité centrale 8 détermine la valeur d'une donnée $\eta$i d'appartenance à la route du pixel P1i. Par exemple, la donnée $\eta$i peut être une variable binaire qui prend la valeur 1 lorsque la condition de l'étape 107 est vérifiée et la valeur 0 sinon. L'unité centrale 8 mémorise le couple (P1i, $\eta$i).

A l'étape 109, l'unité centrale 8 teste une condition d'existence de pixel non encore sélectionné à l'étape 106. La condition est vérifiée lorsqu'un pixel de la zone d'intérêt 9 n'a pas encore été sélectionné à l'étape 106. Lorsque la condition est vérifiée, le procédé retourne à l'étape 106. Lorsque la condition n'est pas vérifiée, le procédé passe à l'étape 110.

A l'étape 110, l'unité centrale 8 sélectionne un couple (P1j, $\eta$j=1) qui n'a pas encore été sélectionné à l'étape 110, j étant un entier compris entre 1 et le nombre de pixels de la zone d'intérêt 9. En d'autres termes l'unité centrale 8 sélectionne un pixel P1j parmi l'ensemble des pixels de la zone d'intérêt n'appartenant pas à la route 2.

A l'étape 111, une condition de correspondance entre la profondeur du pixel P1j sélectionné à l'étape 110 et la profondeur de la cible C est testée.

Pour cela, l'unité centrale 8 fait l'hypothèse que le pixel P1j sélectionné à l'étape 110 est situé à la même profondeur que la cible C. L'unité centrale 8 détermine le pixel P2j de la deuxième image 7 qui correspond au pixel P1j de la première image à partir de cette hypothèse et de formules de projection décrites en détail dans le document de R. Labayrade, D. Aubert et J.P. Tarel, « Real Time Obstacle Détection on Non Flat Road Geometry through 'V-Disparity' Representation », comptes-rendus de la conférence IEEE Intelligent Véhicules Symposium, IV 2002, Versailles, Juin 2002. Les formules de projections permettent de déterminer une valeur $\Delta$c de la variable de disparité $\Delta$ associée à la profondeur de la cible C. L'abscisse du pixel P2j est égale à la somme de l'abscisse du pixel P1j et de la valeur $\Delta$c. Les ordonnées des pixels P1j et P2j sont les mêmes.

On notera que, si le pixel P1i se trouve sur l'image de droite et le pixel P2j sur l'image de gauche, l'abscisse du pixel P2j est égale à la différence entre l'abscisse du pixel P1j et la valeur $\Delta$c.

L'unité centrale 8 évalue la ressemblance d'un voisinage du pixel P1j et d'un voisinage du pixel P2j, de manière similaire à ce qui a été décrit pour l'étape 107.

Cette étape permet de déterminer si la cible détectée par le laser 3 correspond à l'obstacle potentiel détecté par le dispositif de stéréovision. Il s'agit donc d'un troisième contrôle de la présence d'un obstacle.

La condition est vérifiée lorsque la profondeur du pixel P1j correspond à la profondeur de la cible C.

A l'étape 112, l'unité centrale 8 détermine la valeur d'une donnée de profondeur $\beta$j. Par exemple, la donnée $\beta$j peut être une variable binaire qui prend la valeur 1 lorsque la condition de l'étape 111 est vérifiée et la valeur 0 sinon. L'unité centrale 8 mémorise le couple (P1j, $\beta$j).

A l'étape 113, une condition de couple (P1j, $\eta$j=1) restant à sélectionner à l'étape 110 est testée. La condition est vérifiée lorsqu'un pixel de l'ensemble des pixels n'appartenant pas à la route n'a pas encore été sélectionné à l'étape 110. Lorsque la condition est vérifiée, le procédé retourne à l'étape 110, sinon le procédé passe à l'étape 114.

A l'étape 114, l'unité centrale 8 compte les pixels de la zone d'intérêt dont la donnée de profondeur $\beta$ vaut 1,

c'est-à-dire les pixels qui vérifient d'une part la condition de l'étape 107 et d'autre part la condition de l'étape 111. L'unité centrale 8 considère qu'un objet a été détecté si le nombre de pixels comptés est supérieur à un seuil prédéterminé. Le seuil est proportionnel à la confiance que l'on accorde à l'existence d'un obstacle. Il dépend par exemple des détections précédentes.

Lorsqu'un obstacle est détecté, l'unité centrale 8 peut commander le freinage ou alerter le conducteur, par exemple.

Bien que le procédé ait été décrit pour une cible C, il est bien évident que les étapes 102 à 114 peuvent être répétées autant de fois qu'il existe d'obstacles potentiels. Ainsi, à partir de deux images 4, 6 et d'un ensemble d'impacts laser, ce procédé permet de détecter les obstacles en évitant des erreurs de détection, qui peuvent être notamment dues à un impact laser sur la route lors de tangage du véhicule.

On notera que ce procédé est peu sensible aux erreurs d'appariement qui peuvent être commises lors de la création d'une carte de disparité. En effet, le procédé d'extraction du profil local est robuste à ces erreurs d'appariement et la limitation du nombre de candidats d'appariement testés, c'est-à-dire deux candidats, le premier correspondant à la surface de la route, le second correspondant à la profondeur de l'obstacle, permet de réduire le risque d'erreur d'appariement.

**Procédé de détermination d'une carte de v-disparité**

En se référant aux figures 2, 5 et 8, on va maintenant décrire les étapes d'un procédé de détermination d'une carte de disparité des images 5, 7.

A l'étape 200, l'unité centrale 8 détermine une première vue schématique 15 (figure 2) par extraction des bords non horizontaux de la première image 5, par un procédé de traitement d'image connu en soi. Un bord est défini par un changement de contraste sur la première image 5. Par exemple, un bord 21 est défini par la jonction entre une bordure d'une ligne de marquage 40, qui est sensiblement blanche, et le reste de la route, qui est plus foncée. Un bord est dit horizontal lorsqu'il s'étend sensiblement selon la direction X2. Dans le procédé décrit, les bords horizontaux n'ont pas d'intérêt pour la détermination de la carte de disparité et ne sont donc pas extraits. L'unité centrale 8 détermine de manière similaire une deuxième vue schématique 16 (figure 2) par extraction des bords non horizontaux de la deuxième image 5.

A l'étape 201, l'unité centrale 8 sélectionne une ligne horizontale 17 sur la deuxième vue 16.

A l'étape 202, l'unité centrale 8 sélectionne un bord 18 de la deuxième vue 16 et détermine l'intersection 25 de la ligne 17 et du bord 18.

A l'étape 203, l'unité centrale 8 détermine une ligne épipolaire 19, correspondant à la ligne 17, sur la première vue 15. Dans l'exemple, du fait de la géométrie du dispositif de stéréovision, c'est-à-dire de la position des caméras 4, 6, la ligne 19 est horizontale.

A l'étape 204, l'unité centrale 8 sélectionne un bord 20 de la première vue 15, et détermine l'intersection 26 de la ligne horizontale 19 avec le bord 20.

A l'étape 205, l'unité centrale 8 calcule une valeur V1 d'une variable de ressemblance. La variable de ressemblance dépend de la ressemblance entre l'intersection 25 sélectionnée à l'étape 202 et l'intersection 26 sélectionnée à l'étape 204. La variable de ressemblance est par exemple définie de manière similaire à la variable de ressemblance A décrite précédemment. La valeur de la variable de ressemblance est d'autant plus faible que la ressemblance est importante. La valeur V1 est symbolisée par un trait verticale 29 sur la vue 15.

A l'étape 206, l'unité centrale 8 teste une condition de bord restant qui est vérifiée lorsqu'un bord de la première vue 15 qui coupe la ligne 19 n'a pas encore été sélectionné à l'étape 204.

Lorsque la condition est vérifiée, le procédé retourne à l'étape 204.

A l'étape 204, l'unité centrale 8 sélectionne un bord 21 de la première vue 15, et détermine l'intersection 27 de la ligne horizontale 19 avec le bord 21.

A l'étape 205, l'unité centrale 8 calcule une valeur V2 de la variable de ressemblance. La valeur V2 est symbolisée par un trait vertical 30 sur la vue 15.

A l'étape 206, l'unité centrale 8 teste la condition de bord restante. La condition étant vérifiée, le procédé retourne à l'étape 204.

A l'étape 204, l'unité centrale 8 sélectionne un bord 22 de la première vue 15, et détermine l'intersection 28 de la ligne horizontale 19 avec le bord 22.

A l'étape 205, l'unité centrale 8 calcule une valeur V3 de la variable de ressemblance. La valeur V3 est symbolisée par un trait vertical 31 sur la vue 15.

A l'étape 206, lorsque la condition n'est pas vérifiée, le procédé passe à l'étape 207.

A l'étape 207, l'unité centrale 8 détermine l'intersection de la première vue 15 pour lequel la valeur de la variable de ressemblance est la plus faible, c'est-à-dire, dans notre exemple, l'intersection 27.

A l'étape 208, l'unité centrale 8 calcule la distance d entre l'abscisse de l'intersection déterminée à l'étape 202, c'est-à-dire l'intersection 25, dans le repère R2, et l'abscisse de l'intersection déterminée à l'étape 207, c'est-à-dire l'intersection 27, dans le repère R1. Cette distance d est égale à la valeur de la variable de disparité $\Delta$ pour l'ordonnée de la ligne 17 dans le repère R2, qui correspond à l'ordonnée de la ligne 19 dans le repère R1.

Pour tracer la carte de disparité, les étapes 200 à 208 sont répétées de manière similaire pour un ensemble d'intersection de bords de la deuxième vue et de lignes horizontales d'ordonnées différentes. Sur la carte de disparité, une couleur est associée à un intervalle de valeurs de la variable de disparité $\Delta$. La carte de disparité est sensiblement une vue en couleurs de la première vue schématique 15, la couleur d'une zone de la carte étant fonction de la profondeur de cette zone. Une telle carte de disparité est connue en soi.

L'étape 209 permet d'obtenir une carte de v-disparité 10 (figure 5) à partir de la carte de disparité. Avant d'effectuer l'étape 209, l'unité centrale 8 affecte une valeur initiale, par exemple 0, au niveau de gris de tous les pixels de la carte de v-disparité.

A l'étape 209, l'unité centrale 8 sélectionne une ligne horizontale de la carte de disparité, d'ordonnée vd. Pour chaque pixel de disparité précédemment calculé sur la ligne horizontale d'ordonnée vd, l'unité centrale 8 détermine la valeur $\Delta$d de la variable de disparité $\Delta$ au niveau de l'intersection et incrémente le niveau de gris du pixel ($\Delta$d, vd) de la carte de v-disparité.

L'étape 209 est répétée pour un ensemble de lignes horizontales de la carte de disparité pour obtenir la carte de v-disparité 10 (figure 5) qui est un graphe représentant l'évolution de la variable de disparité $\Delta$ en fonction de l'axe Y1 du repère R1. Le niveau de gris du pixel ($\Delta$d, vd) sur la carte de v-disparité est proportionnel au nombre de pixels de disparité $\Delta$d sur la ligne vd de la carte de disparité. On notera que le profil de la route 2 correspond à la ligne 12 de la carte de disparité 10, un obstacle étant représenté par une ligne verticale 33.

Un tel procédé est décrit en détail dans le document de R. Labayrade, D. Aubert et J.P. Tarel, « Real Time Obstacle Détection on Non Flat Road Geometry through 'V-Disparity' Représentation », comptes-rendus de la conférence IEEE Intelligent Véhicules Symposium, IV 2002, Versailles, Juin 2002.

En se référant aux figures 4 et 9, on va maintenant décrire un deuxième mode de réalisation du dispositif de détection d'obstacle.

Dans ce mode de réalisation, le dispositif de détection d'obstacle ne comporte pas de laser.

Dans ce cas, l'étape 100 du procédé de détection d'obstacle est supprimée. Lorsque l'étape 101 a été effectuée, le procédé passe à l'étape 102A (figure 9).

A l'étape 102A, l'unité centrale 8 détermine une carte de disparité et une carte de v-disparité associées aux images 5 et 7, d'une manière similaire à ce qui a été décrit précédemment.

A l'étape 102B, l'unité centrale 8 sélectionne un point de disparité connue de la carte de disparité déterminée à l'étape 102A, par exemple le point 32, ce point définissant la cible. Lorsque l'étape 102B a été effectuée, le procédé passe à l'étape 103. Les étapes 103 a 115 sont effectuées de manière similaire a ce qui a été décrit dans le premier mode de réalisation.

En variante, dans le deuxième mode de réalisation, à l'étape 102B l'unité centrale 8 détecte un objet au-dessus de la surface de la route et le caractérise par un cadre englobant, par un procédé décrit en détail dans la publication « Real Time Obstacle Detection on Non Flat Road Geometry through 'V-Disparity' Représentation », comptes-rendus de la conférence IEEE Intelligent Véhicules Symposium, IV 2002, Versailles, Juin 2002. Le cadre englobant est par exemple un rectangle entourant l'objet. L'unité centrale 8 définit la cible par le centre de gravité du cadre englobant. Les étapes 103 a 115 sont effectuées de manière similaire a ce qui a été décrit dans le premier mode de réalisation.

En se référant à la figure 10, on va maintenant décrire un troisième mode de réalisation.

Dans ce mode de réalisation, le procédé de détection d'obstacle comprend des étapes 300 à 305 qui sont similaires aux étapes 100 à 105.

A l'étape 306, l'unité centrale 8 teste une condition d'écart entre l'altitude de la cible C et la surface de la route estimée à partir de la carte de v-disparité dans la zone d'intérêt correspondant à la cible.

Pour cela, l'unité centrale 8 détermine l'ordonnée vc et la valeur $\Delta$c de la variable de disparité $\Delta$ correspondant à la cible C à partir de la position 3D de la cible C et des formules de projection détaillées dans la publication « Real Time Obstacle Détection on Non Flat Road Geometry through 'V-Disparity' Représentation » comptes-rendus de la conférence IEEE Intelligent Véhicules Symposium, IV 2002, Versailles, Juin 2002.

Pour la valeur $\Delta$c, l'unité centrale 8 compare l'ordonnée vr du profil de la route et l'ordonnée vc. La condition est vérifiée lorsque vr - vc > s où s est un seuil prédéterminé.

L'unité centrale 8 considère qu'un objet a été détecté lorsque la condition est vérifiée.

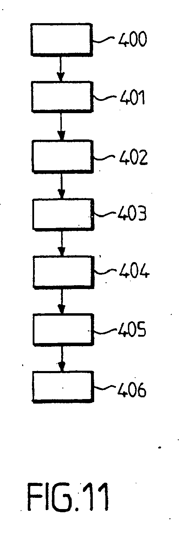

En se référant à la figure 11, on va maintenant décrire un quatrième mode de réalisation.

Dans ce mode de réalisation, le procédé de détection d'obstacle comprend des étapes 400 à 404 qui sont similaires aux étapes 100 à 104.

A l'étape 405, l'unité centrale 8 détermine, par exemple par une transformée de Hough, la droite la plus dense sur la carte de v-disparité de la zone d'intérêt.

A l'étape 406, l'unité centrale 8 compare la pente de la droite déterminée à l'étape 405 avec un seuil prédéterminé. L'équation de la droite est de la forme v=K1.Δ+K2, la pente de la droite étant K1. L'unité centrale 8 considère qu'un obstacle a été détecté si la valeur absolue de la pente K1 est inférieure au seuil prédéterminé. En d'autres termes, la présence d'un obstacle est confirmée si la droite est sensiblement verticale.

D'autres variantes sont possibles. La cible peut être définie en fonction de détections passées. L'unité centrale 8 peut par exemple sélectionner comme cible un point d'un obstacle qui a été détecté précédemment.

Dans le cas du premier mode de réalisation, une cible peut être constituée par le centre de gravité d'un ensemble d'impacts laser proches les uns des autres. Un procédé permettant de regrouper les impacts laser proches les uns des autres est décrit dans le document de R. Labayrade, C. Royere, D. Gruyer et D. Aubert, « Cooperative Fusion for Multi-Obstacles Détection with Use of Stereovision and Laser Scanner », comptes-rendus de la conférence IEEE ICAR 2003, Special Session on « Robotics Technologies for intelligent Road Vehicles », Coimbra, Portugal, 30 juin - 3 juillet, 2003.

**Revendications**

1. Procédé de détection d'un obstacle sur une route (2) sur laquelle se trouve un véhicule, comprenant les étapes consistant à :

   a) définir (102, 102A, 102B) une cible (C) par une position tridimensionnelle,

   b) déterminer une zone d'intérêt (9) associée à ladite cible définie à l'étape a), ladite zone d'intérêt étant une portion d'une image (5, 7) représentant ladite route, ladite image étant réalisée par un dispositif d'acquisition (4, 6) embarqué dans ledit véhicule, ledit dispositif d'acquisition étant un dispositif de stéréovision comprenant deux caméas (4, 6) fournissant chacune une image (5, 7) représentant la route (2) cette étape comprenant une sous-étape consistant à estimer une géométrie locale de ladite route dans ladite zone d'intérêt en déterminant (104) une carte de v-disparité de ladite zone d'intérêt à partir desdites deux images, ladite carte de v-disparité représentant une variable de disparité (Δ) en fonction d'une coordonnée (v), dite ordonnée, liée auxdites images, ladite géométrie locale de la route étant définie par un profil local de la route sur ladite carte de v-disparité,

   c) détecter la présence d'un obstacle dans ladite zone d'intérêt, à partir de ladite géométrie locale de la route, la présence d'un obstacle étant détectée à partir d'un ensemble de pixels de ladite zone d'intérêt n'appartenant pas audit profil local,

   l'étape c) comprenant les sous-étapes consistant à :

   d) sélectionner (106) un pixel (P1i) de ladite zone d'intérêt (9), ladite zone d'intérêt étant une zone d'une desdites deux images, dite première image (5),

   e) déterminer (107) la position d'un pixel (P2i) de l'autre desdites deux images, dite deuxième image (7), correspondant audit pixel sélectionné à l'étape d) en faisant l'hypothèse que ledit pixel sélectionné à l'étape d) appartient au profil local estimé à l'étape b),

   f) comparer (107) un voisinage (11) dudit pixel de ladite première image et dudit pixel correspondant de ladite deuxième image pour déterminer la valeur d'une variable de ressemblance, ladite valeur de la variable de ressemblance étant d'autant plus faible que ledit voisinage (11) du pixel de ladite première image et du pixel correspondant de ladite deuxième image sont ressemblants, et

   g) si la valeur de ladite variable de ressemblance est inférieure à un seuil prédéterminé, considérer que ledit pixel de ladite première image appartient au profil de la route, sinon considérer que ledit pixel de ladite première image n'appartient pas au profil de la route.

2. Procédé de détection d'un obstacle selon la revendication 1, **caractérisé en ce que** l'étape b) comprend la sous-étape consistant à définir (103) une zone d'intérêt (9) par un rectangle de surface prédéterminée, ledit rectangle étant centré sur un pixel (PC) de ladite zone d'intérêt de ladite image (5, 7) correspondant à ladite cible (C).

3. Procédé de détection d'un obstacle selon la revendication 1 ou 2, **caractérisé en ce que** ledit dispositif d'acquisition est un premier dispositif d'acquisition (4, 6), et **en ce que**, à l'étape a), ladite cible (C) est définie par un point d'un obstacle potentiel détecté par un deuxième dispositif d'acquisition embarqué dans ledit véhicule.

4. Procédé de détection d'un obstacle selon la revendication 3, **caractérisé en ce que** ledit deuxième dispositif d'acquisition est un laser (3), disposé dans ledit véhicule de manière à fournir des impacts laser dans un plan sensiblement horizontal et de hauteur (h) prédéterminée par rapport à un repère (R) lié au véhicule, ladite cible étant définie par un impact laser.

5. Procédé de détection d'un obstacle selon la revendication 3, **caractérisé en ce que** ledit deuxième dispositif d'acquisition est un laser, disposé dans ledit véhicule de manière à fournir des impacts laser dans un plan sensiblement horizontal et de hauteur prédéterminée par rapport à un repère lié au véhicule, ladite cible étant définie par le centre de gravité d'un ensemble d'impacts laser proches les uns des autres.

6. Procédé de détection d'un obstacle selon la revendication 1 ou 2, **caractérisé en ce que** ledit dispositif d'acquisition est un dispositif de stéréovision comprenant deux caméras disposées dans ledit véhicule à distance l'une de l'autre, l'étape a) comprenant la sous-étape consistant à déterminer une carte de disparité à partir de deux images de la route provenant respectivement desdites deux caméras, ladite cible étant définie par un point de disparité connue de ladite carte de disparité.

7. Procédé de détection d'un obstacle selon la revendication 1 ou 2, **caractérisé en ce que** ledit dispositif d'acquisition est un dispositif de stéréovision comprenant deux caméras disposées dans ledit véhicule à distance l'une de l'autre, l'étape a) comprenant les sous-étapes consistant à détecter un objet disposé au-dessus du niveau de la route et à caractériser ledit objet par un cadre englobant, ladite cible étant définie par le centre de gravité dudit cadre englobant.

8. Procédé de détection d'un obstacle selon la revendication 1, **caractérisé en ce que** l'étape c) comporte les sous-étapes consistant à :

h) sélectionner (110) un pixel (P1j) de ladite zone d'intérêt qui n'appartient pas audit profil local,
i) tester (111) une condition de correspondance entre la profondeur dudit pixel sélectionné à l'étape h) et la profondeur de ladite cible, ladite condition étant vérifiée lorsque la profondeur dudit pixel correspond à la profondeur de ladite cible, la profondeur dudit pixel étant définie comme une composante de la distance entre ledit véhicule et un point représenté par ledit pixel selon une direction longitudinale du véhicule, la profondeur de ladite cible étant définie comme une composante de la distance entre ledit véhicule et ladite cible selon ladite direction longitudinale (Z) du véhicule,
j) répéter les étapes h) et i) pour chaque pixel d'un ensemble de pixels de ladite zone d'intérêt n'appartenant pas audit profil local, et
k) détecter la présence d'un obstacle si la condition de l'étape i) est vérifiée pour un nombre de pixels supérieur à un seuil prédéterminé.

9. Procédé de détection d'un obstacle selon la revendication 8, **caractérisé en ce qu'**à l'étape h) ladite zone d'intérêt est une zone d'une desdites deux images, dite première image (5), l'étape i) comprenant les sous-étapes consistant à :

l) déterminer la position d'un pixel (P2j) de l'autre desdites deux images, dite deuxième image (7), correspondant audit pixel (P1j) sélectionné à l'étape h) en faisant l'hypothèse que ledit pixel sélectionné à l'étape h) à la même profondeur que ladite cible,
m) comparer un voisinage dudit pixel de ladite première image et dudit pixel correspondant de ladite deuxième image pour déterminer la valeur d'une variable de ressemblance,
n) et si la valeur de ladite variable de ressemblance est inférieur à un seuil prédéterminé, considérer que la profondeur dudit pixel de ladite première image est égale à la profondeur de ladite cible, sinon considérer que la profondeur dudit pixel de ladite première image n'est pas égale à la profondeur de ladite cible.

10. Dispositif de détection d'un obstacle embarqué dans un véhicule, comprenant des moyens de définition de cible (3) aptes à définir une cible (C) par une position tridimensionnelle, des moyens de détermination d'une zone d'intérêt (9) associée à ladite cible, ladite zone d'intérêt étant une portion d'une image (5, 7) représentant ladite route, ladite image étant réalisée par un dispositif d'acquisition (4, 6) dudit dispositif de détection, ledit dispositif de détection comportant des moyens de traitement (8) aptes à détecter la présence d'un obstacle dans ladite zone d'intérêt, **caractérisé en ce qu'**il est adapté pour mettre en oeuvre le procédé selon l'une quelconque des revendications 1 à 9.

## Claims

1. A method for detecting an obstacle on a road (2), on which a vehicle is travelling, comprising the following steps:

a) defining (102, 102A, 102B) a target (C) by a three-dimensional position,
b) determining an are a of interest (9) associated with said target defined in step a), wherein said area of interest is a portion of an image (5, 7) representing said road, wherein said image is taken by an acquisition device (4, 6) onboard the vehicle,

wherein the acquisition device is a stereovision device comprising two cameras (4, 6), each providing one image (5, 7) representing the road (2), wherein this step comprises a sub-step of estimating a local geometry of said road in said area of interest by determining (104) a v-disparity map of said area of interest from said two images, wherein said v-disparity map represents a disparity variable ($\Delta$) as a function of a coordinate (v), the so-called ordinate, related to said images, wherein the local geometry of the road is defined by a local profile of the road in said v-disparity map,

c) detecting the presence of an obstacle in said area of interest from said local geometry of the road, wherein the presence of an obstacle is detected from a set of pixels of said area of interest, which does not belong to said local profile,

wherein step c) comprises the following sub-steps:

d) selecting (106) a pixel (P1i) of said area of interest (9), wherein said area of interest is an area of one of said two images, the so-called first image (5),

e) determining (107) the position of a pixel (P2i) of the other of said two images, the so-called second image (7), corresponding to said pixel selected in step d), by constructing the hypothesis that said pixel selected in step d) belongs to the local profile estimated in step b),

f) comparing (107) a proximity (11) of said pixel of said first image and of said pixel corresponding to said second image so as to determine the value of a variable of resemblance, wherein said value of the variable of resemblance is all the lower the more the proximities (11) of the pixel of said first image and of the corresponding pixel of said second image are alike, and

g) if the value of said variable of resemblance is lower than a predetermined threshold, considering that said pixel of said first image belongs to the profile of the road, otherwise considering that said pixel of said first image does not belong to the profile of the road.

2. The method for detecting an obstacle according to claim 1, **characterized in that** step b) comprises the sub-step of defining (103) an area of interest (9) by a rectangle having a predetermined area, said rectangle being centered around a pixel (PC) of said area of interest of said image (5, 7) corresponding to the target (C).

3. The method for detecting an obstacle according to claim 1 or 2, **characterized in that** said acquisition device is a first acquisition device (4, 6), and that in step a) said target (C) is defined by a point of a possible obstacle detected by a second acquisition device onboard said vehicle.

4. The method for detecting an obstacle according to claim 3, **characterized in that** said second acquisition device is a laser (3) arranged in said vehicle so as to provide laser impacts in a plane, which is substantially horizontal and has a height (h), which is predetermined with respect to a mark (R) related to the vehicle, said target being defined by a laser impact.

5. The method for detecting an obstacle according to claim 3, **characterized in that** said second acquisition device is a laser arranged in said vehicle so as to provide laser impacts in a plane, which is substantially horizontal and has a height (h), which is predetermined with respect to a mark (R) related to the vehicle, said target being defined by the center of gravity of a set of laser impacts located close to each other.

6. The method for detecting an obstacle according to claim 1 or 2, **characterized in that** said acquisition device is a stereovision device comprising the two cameras arranged at a distance from each other in said vehicle, wherein step a) comprises the sub-step of determining a disparity map from two images of the road, respectively resulting from said two cameras, said target being defined by a point of known disparity of said disparity map.

7. The method for detecting an obstacle according to claim 1 or 2, **characterized in that** said acquisition device is a stereovision device comprising two cameras arranged at a distance from each other in said vehicle, wherein step a) comprises the sub-steps of detecting an object arranged above road level, and characterizing said object by a global frame, said target being defined by the center of gravity of said global frame.

8. The method for detecting an obstacle according to claim 1, **characterized in that** step c) comprises the following sub-steps:

h) selecting (110) a pixel (P1j) of said area of interest, which does not belong to said local profile,

i) testing (111) a matching condition between the depth of said pixel selected in step h) and the depth of said target, the condition being verified if the depth of said pixel corresponds to the depth of said target, wherein the depth of said pixel is defined as a component of the distance between said vehicle and a point represented by said pixel in a longitudinal direction of the vehicle, wherein the depth of said target is defined as a component of the distance between said vehicle and said target in said longitudinal direction (Z) of the vehicle,

j) repeating steps h) and i) for each pixel of a set of pixels of said area of interest, which does not belong to said local profile, and

k) detecting the presence of an obstacle if the condition of step i) is verified for a number of pixels greater than a predetermined threshold.

9. The method for detecting an obstacle according to claim 8, **characterized in that** in step h) said area of interest is an area of one of said two images, the so-called first image (5), wherein step i) comprises the following sub-steps:

l) determining the position of a pixel (P2j) of the other of said two images, the so-called second image (7) corresponding to said pixel (P1j) selected in step h), by constructing the hypothesis that said pixel selected in step h) has the same depth as said target,

m) comparing a proximity of said pixel of said first image and of said pixel corresponding to said second image so as to determine the value of a variable of resemblance, and

n) if the value of said variable of resemblance is lower than a predetermined threshold, considering that the depth of said pixel of said first image is the same as the depth of said target, otherwise considering that the depth of said pixel of said first image is not the same as the depth of said target.

10. A device for detecting an obstacle, onboard a vehicle, comprising means for defining a target (3), adapted for defining a target (C) by a three-dimensional position, means for determining an area of interest (9) associated with said target, wherein said area of interest is a portion of an image (5, 7) representing said road, wherein said image is realized by an acquisition device (4, 6) of said detecting device, said detecting device comprising processing means (8) adapted for detecting the presence of an obstacle in said area of interest, **characterized in that** it is adapted for implementing the method according to any of claims 1 to 9.

**Patentansprüche**

1. Verfahren zum Erfassen eines Hindernisses auf einer Straße (2), auf der sich ein Fahrzeug befindet, umfassend folgende Schritte:

a) Definieren (102, 102A, 102B) eines Ziels (C) durch eine dreidimensionale Position,

b) Bestimmen eines Zielbereichs (9), der mit dem in Schritt a) definierten Ziel verknüpft ist, wobei der Zielbereich ein Abschnitt eines Bildes (5, 7) ist, das die Straße darstellt, wobei das Bild von einer Aufnahmevorrichtung (4, 6) angefertigt wird, die in dem Fahrzeug mitgeführt wird,

wobei die Aufnahmevorrichtung eine Stereoskopievorrichtung ist, die zwei Kameras (4, 6) umfasst, die je ein Bild (5, 7) liefern, das die Straße (2) darstellt, wobei dieser Schritt einen Teilschritt umfasst, der darin besteht, eine lokale Geometrie der Straße in dem Zielbereich zu schätzen, indem eine v-Disparitätskarte des Zielbereichs aus den beiden Bildern bestimmt (104) wird, wobei die v-Disparitätskarte eine Disparitätsvariable ($\Delta$) als Funktion einer Koordinate (v), der sogenannten Ordinate, darstellt, die mit den Bildern zusammenhängt, wobei die lokale Geometrie der Straße durch ein lokales Profil der Straße auf der v-Disparitätskarte definiert ist,

c) Erfassen des Vorhandenseins eines Hindernisses in dem Zielbereich aus der lokalen Geometrie der Straße, wobei das Vorhandensein eines Hindernisses aus einer Pixelgruppe des Zielbereichs, die nicht dem lokalen Profil angehört, erfasst wird,

wobei der Schritt c) folgende Teilschritte umfasst:

d) Auswählen (106) eines Pixels (P1i) des Zielbereichs (9), wobei der Zielbereich ein Bereich eines der beiden Bilder, des sogenannten ersten Bildes (5), ist,

e) Bestimmen (107) der Position eines Pixels (P2i) des anderen der beiden Bilder, des sogenannten zweiten Bildes (7), das dem Pixel entspricht, das in Schritt d) ausgewählt wird, wobei die Hypothese aufgestellt wird, dass das in Schritt d) ausgewählte Pixel dem in Schritt b) geschätzten lokalen Profil angehört,

f) Vergleichen (107) einer Umgebung (11) des Pixels des ersten Bildes und des entsprechenden Pixels des zweiten Bildes, um den Wert einer Ähnlichkeitsvariablen zu bestimmen, wobei der Wert der Ähnlichkeitsvariablen umso geringer ist als sich die Umgebungen (11) des Pixels des ersten Bildes und des entsprechenden Pixels des zweiten Bildes ähneln, und

g) wenn der Wert der Ähnlichkeitsvariablen geringer als ein vorherbestimmter Schwellenwert ist, Ansehen, dass das Pixel des ersten Bildes dem Profil der Straße angehört, ansonsten Ansehen, dass das Pixel des ersten Bildes nicht dem Profil der Straße angehört.

2.  Verfahren zum Erfassen eines Hindernisses nach Anspruch 1, **dadurch gekennzeichnet, dass** der Schritt b) den Teilschritt umfasst, der darin besteht, einen Zielbereich (9) durch ein Rechteck vorherbestimmter Fläche zu definieren (103), wobei das Rechteck um ein Pixel (PC) des Zielbereichs des Bildes (5, 7), das dem Ziel (C) entspricht, zentriert ist.

3.  Verfahren zum Erfassen eines Hindernisses nach Anspruch 1 oder 2, **dadurch gekennzeichnet, dass** die Erfassungsvorrichtung eine erste Aufnahmevorrichtung (4, 6) ist, und dass in Schritt a) das Ziel (C) durch einen Punkt eines möglichen Hindernisses definiert ist, das von einer zweiten in dem Fahrzeug mitgeführten Aufnahmevorrichtung erfasst wird.

4.  Verfahren zum Erfassen eines Hindernisses nach Anspruch 3, **dadurch gekennzeichnet, dass** die zweite Aufnahmevorrichtung ein Laser (3) ist, der in dem Fahrzeug angeordnet ist, um Lasertreffer in einer Ebene bereitzustellen, die im Wesentlichen waagerecht ist und eine Höhe (h) aufweist, die im Verhältnis zu einer Markierung (R), die mit dem Fahrzeug zusammenhängt, vorherbestimmt ist, wobei das Ziel durch einen Lasertreffer definiert wird.

5.  Verfahren zum Erfassen eines Hindernisses nach Anspruch 3, **dadurch gekennzeichnet, dass** die zweite Aufnahmevorrichtung ein Laser ist, der in dem Fahrzeug angeordnet ist, um Lasertreffer in einer Ebene bereitzustellen, die im Wesentlichen waagerecht ist und eine Höhe (h) aufweist, die im Verhältnis zu einer Markierung (R), die mit dem Fahrzeug zusammenhängt, vorherbestimmt ist, wobei das Ziel durch den Schwerpunkt einer Gruppe von Lasertreffern definiert wird, die nahe beieinander liegen.

6.  Verfahren zum Erfassen eines Hindernisses nach Anspruch 1 oder 2, **dadurch gekennzeichnet, dass** die Aufnahmevorrichtung eine Stereoskopievorrichtung ist, die zwei Kameras umfasst, die in dem Fahrzeug voneinander entfernt angeordnet sind, wobei der Schritt a) den Teilschritt umfasst, der darin besteht, eine Disparitätskarte aus zwei Bildern der Straße zu bestimmen, die jeweils aus den beiden Kameras stammen, wobei das Ziel durch einen Punkt bekannter Disparität der Disparitätskarte definiert wird.

7.  Verfahren zum Erfassen eines Hindernisses nach Anspruch 1 oder 2, **dadurch gekennzeichnet, dass** die Aufnahmevorrichtung eine Stereoskopievorrichtung ist, die zwei Kameras umfasst, die in dem Fahrzeug voneinander entfernt angeordnet sind, wobei der Schritt a) die Teilschritte umfasst, die darin bestehen, ein Objekt zu erfassen, das über dem Straßenniveau angeordnet ist, und dieses Objekt durch einen umfassenden Rahmen zu charakterisieren, wobei das Ziel durch den Schwerpunkt des umfassenden Rahmens definiert wird.

8.  Verfahren zum Erfassen eines Hindernisses nach Anspruch 1, **dadurch gekennzeichnet, dass** der Schritt c) folgende Teilschritte umfasst:

    h) Auswählen (110) eines Pixels (P1j) des Zielbereichs, das nicht dem lokalen Profil angehört,
    i) Testen (111) einer Entsprechungsbedingung zwischen der Tiefe des in Schritt h) ausgewählten Pixels und der Tiefe des Ziels, wobei die Bedingung erfüllt ist, wenn die Tiefe des Pixels der Tiefe des Ziels entspricht, wobei die Tiefe des Pixels als eine Komponente des Abstands zwischen dem Fahrzeug und einem Punkt definiert wird, der durch das Pixel in einer Längsrichtung des Fahrzeugs dargestellt wird, wobei die Tiefe des Ziels als ein Bestandteil des Abstands zwischen dem Fahrzeug und dem Ziel in der Längsrichtung (Z) des Fahrzeugs definiert wird,
    j) Wiederholen der Schritte h) und i) für jedes Pixel einer Pixelgruppe des Zielbereichs, die nicht dem lokalen Profil angehört, und
    k) Erfassen des Vorhandenseins eines Hindernisses, wenn die Bedingung von Schritt i) für eine Anzahl von Pixeln erfüllt ist, die größer als ein vorherbestimmter Schwellenwert ist.

9.  Verfahren zum Erfassen eines Hindernisses nach Anspruch 8, **dadurch gekennzeichnet, dass** in Schritt h) der Zielbereich ein Bereich eines der beiden Bilder ist, des sogenannten ersten Bildes (5), wobei der Schritt i) die folgenden Teilschritte umfasst:

    l) Bestimmen der Position eines Pixels (P2j) des anderen der beiden Bilder, des sogenannten zweiten Bildes (7), das dem Pixel (P1j) entspricht, das in Schritt h) ausgewählt wird, indem die Hypothese aufgestellt wird, dass das in Schritt h) ausgewählte Pixel die gleiche Tiefe wie das Ziel aufweist,
    m) Vergleichen einer Umgebung des Pixels des ersten Bildes und des entsprechenden Pixels des zweiten Bildes, um den Wert einer Ähnlichkeitsvariablen zu bestimmen, und
    n) wenn der Wert der Ähnlichkeitsvariablen geringer als ein vorherbestimmter Schwellenwert ist, Ansehen, dass die Tiefe des Pixels des ersten Bildes gleich der Tiefe des Ziels ist, ansonsten Ansehen, dass die Tiefe des Pixels des ersten Bildes nicht gleich der Tiefe des Ziels ist.

10. Vorrichtung zum Erfassen eines Hindernisses, die in einem Fahrzeug mitgeführt wird, umfassend Mittel zum Definieren eines Ziels (3), die dazu geeignet sind, ein Ziel (C) durch eine dreidimensionale Position zu definieren, Mittel zum Bestimmen eines Zielbereichs (9), der mit dem Ziel verknüpft ist, wobei der Zielbereich ein Abschnitt eines Bildes (5, 7) ist, das die Straße darstellt, wobei das Bild von einer Aufnahmevorrichtung (4, 6) der Erfassungsvorrichtung angefertigt wird, wobei die Erfassungsvorrichtung Verarbeitungsmittel (8) umfasst, die dazu geeignet sind, das Vorhandensein eines Hindernisses in dem Zielbereich zu erfassen, **dadurch gekennzeichnet, dass** sie dazu geeignet ist, das Verfahren nach einem der Ansprüche 1 bis 9 umzusetzen.

FIG.1

FIG.2

FIG.3

FIG.4

FIG.8

**FIG.5**

**FIG.6**

**FIG.7**

**FIG.9**

**FIG.10**

FIG.11

## RÉFÉRENCES CITÉES DANS LA DESCRIPTION

**Documents brevets cités dans la description**

- WO 03001472 A
- US 5410346 A

**Littérature non-brevet citée dans la description**

- **R. Labayrade ; D. Aubert ; J.P. Tarel.** Real Time Obstacle Detection on Non Flat Road Geometry through 'V-Disparity' Représentation. *IEEE Intelligent Véhicules Symposium,* Juin 2002, vol. IV
- **R. Labayrade ; D. Aubert ; J.P. Tarel.** Real Time Obstacle Détection on Non Flat Road Geometry through 'V-Disparity' Representation. *IEEE Intelligent Véhicules Symposium,* Juin 2002, vol. IV
- **R. Labayrade ; D. Aubert ; J.P. Tarel.** Real Time Obstacle Détection on Non Flat Road Geometry through 'V-Disparity' Représentation. *IEEE Intelligent Véhicules Symposium,* Juin 2002, vol. IV
- Real Time Obstacle Detection on Non Flat Road Geometry through 'V-Disparity' Représentation. *IEEE Intelligent Véhicules Symposium,* Juin 2002, vol. IV
- Real Time Obstacle Détection on Non Flat Road Geometry through 'V-Disparity' Représentation. *IEEE Intelligent Véhicules Symposium,* Juin 2002, vol. IV
- **R. Labayrade ; C. Royere ; D. Gruyer ; D. Aubert.** Cooperative Fusion for Multi-Obstacles Détection with Use of Stereovision and Laser Scanner. *IEEE ICAR,* 30 Juin 2003